Europäisches Patentamt

European Patent Office

Office européen des brevets

(11) Numéro de publication : **0 390 765 B1**

(12)                    **FASCICULE DE BREVET EUROPEEN**

(45) Date de publication du fascicule du brevet :
     **22.04.92 Bulletin 92/17**

(51) Int. Cl.$^5$ : **F28F 25/08,** F28F 19/00,
     F28F 21/06

(21) Numéro de dépôt : **90870038.8**

(22) Date de dépôt : **14.03.90**

(54) **Feuilles de ruissellement résistantes à l'encrassement biologique.**

(30) Priorité : **29.03.89 BE 8900343**

(43) Date de publication de la demande :
     **03.10.90 Bulletin 90/40**

(45) Mention de la délivrance du brevet :
     **22.04.92 Bulletin 92/17**

(84) Etats contractants désignés :
     **AT CH DE DK ES FR GB GR IT LI LU NL SE**

(56) Documents cités :
     **EP-A- 0 144 726**
     **EP-A- 0 163 911**
     **EP-A- 0 209 898**

(56) Documents cités :
     **EP-A- 0 229 199**
     **EP-A- 0 259 946**
     **DE-A- 1 694 894**
     **FR-A- 2 132 662**
     **US-A- 4 049 822**

(73) Titulaire : **HAMON-SOBELCO S.A.**
     **50-58, Rue Capouillet**
     **B-1060 Bruxelles (BE)**

(72) Inventeur : **Johnson, Charles Vincent**
     **40 Caedman Crescent**
     **Darlington, Co Durham DL38F (GB)**

(74) Mandataire : **de Kemmeter, François et al**
     **Cabinet Bede 13, avenue Antoine Depage**
     **B-1050 Bruxelles (BE)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un dispositif de garnissage pour installation de mise en contact direct d'eau et d'air atmosphériques, selon le préambule de la revendication 1. Un tel dispositif est connu selon EP-A- 0 163 911.

Le flux d'eau qui passe dans de tels garnissages provient généralement d'installations industrielles ou de condenseurs de centrales électriques où il a été échauffé, généralement à une température tiède, de 30 à 40°C. Si le circuit est du type ouvert, l'eau retourne à la rivière d'où elle provient, normalement en aval de son lieu de prélèvement. Une telle eau est généralement relativement riche en matière nutritive, organique et inorganique, et en micro-organismes.

La chaleur et l'aération de telles eaux dans les réfrigérants atmosphériques font de celles-ci de remarquables bouillons de cultures. L'air atmosphérique, toujours chargé de poussières et constamment renouvelé, contribue aussi à la pollution biologique des réfrigérants atmosphériques.

On trouve dans ces installations un développement de phytoplacton, d'algues, de bactéries diverses, et même de bryozoaires, de diatomées, de levures et de mycètes (champignons microscopiques). D'autre part, la toxicité de l'amiante (fibres d'asbeste) a conduit à l'abandon de garnissages en plaques d'amiante-ciment, et à la généralisation des garnissages en feuilles profilées en polymères organiques. La faible épaisseur des feuilles et leur faible densité conduit à des paquets ("packings") de garnissage relativement compacts, aux chenaux étroits. La matière plastique procure une certaine adhésion aux substances organiques et aux éléments biologiques qui polluent l'eau; l'étroitesse et la sinuosité des conduits, facteurs recherchés pour leur contribution à l'échange thermique entre l'eau et l'air atmosphérique, favorise la rétention des particules en suspension dans l'eau, notamment de sable, d'argile, de limon, de calcaire...

Il en résulte une obstruction des chenaux de passage de l'air et de l'eau du garnissage conduisant à une réduction du débit d'air du réfrigérant par l'accroissement de sa perte de charge, et donc à une détérioration du refroidissement de l'eau, donc des performances du réfrigérant. Si le réfrigérant est à tirage naturel, la chute des performances est irrémédiable; si le réfrigérant est à tirage forcé, l'accroissement de la puissance de ventilation peut compenser la dégradation thermique, mais les résultats d'exploitation du réfrigérant sont toujours nettement moins bons.

La rétention de matière peut parfois se stabiliser, restant limitée aux zones les plus étroites, les plus anguleuses; le recouvrement de la surface des feuilles plastiques a modifié l'état de surface et éventuellement réduit sa force d'adhésion; mais la stabilisation de l'encrassement en l'absence de traitement de l'eau par produits biocides n'a normalement lieu que lorsque le réfrigérant est souvent arrêté un temps suffisant pour permettre aux boues de sécher. La réalimentation en eau du réfrigérant purge alors le garnissage d'une bonne partie de ses boues. On connaît de nombreux cas où l'encrassement s'est stabilisé à des valeurs comprises entre 20 et 100 kg de boue par mètre cube de garnissage de type film.

Mais il y a des cas où la rétention des matières en suspension et le développement des micro-organismes dans ces matières à l'intérieur du garnissage a conduit à son colmatage. Lorsque l'eau est très chargée de matières en suspension et dans tous les cas où il y a lieu de craindre un colmatage des corps d'échange du type film, une solution au problème de l'encrassement consiste à utiliser un corps d'échange à éclaboussement ("splashing") constitué de caillebotis assez largement espacés, aux mailles assez grandes. Mais l'efficacité par unité de volume de tels corps d'échange est nettement inférieure à celle de corps d'échange à ruissellement en film. L'adjonction de substances biocides à l'eau de circulation est un moyen connu pour lutter contre la pollution biologique. Ont été utilisés à cette fin des produits chlorés, des sels de cuivre, des sels de mercure, des sels d'ammonium quaternaire, des dérivés du phénol.

Si de tels produits sont utilisés à faible dose en continu, apparaît alors souvent une accoutumance des micro-organismes, réduisant fortement l'efficacité de ces produits. Si l'on augmente la dose au point de les rendre sûrement efficaces surgissent deux inconvénients, liés aux purges des réfrigérants : d'une part, le coût dû à la perte de ces produits par ces purges et, d'autre part, la nécessité de protéger l'environnement. Il n'est pas admissible de rejeter à la rivière des eaux de purge aussi toxiques.

Une opération couramment utilisée pour lutter contre l'encrassement biolobique est le traitement intermittant à hautes doses de produits biocides, en particulier le traitement de choc hypochloreux.

L'opération est également onéreuse et nécessite aussi de prendre des précautions vis-à-vis de l'environnement telles l'arrêt des purges ou leur réduction et dilution, depuis le moment où le produit est injecté jusqu'à ce que sa teneur ait décrû suffisamment par suite de son action.

Le but de l'invention est d'avoir un corps d'échange à contact direct eau-air de grandes performances thermiques constitué d'assemblages (packings, garnissage) de feuilles thermoformées en matière plastique (haut polymère organique), en particulier en polychlorure de vinyle (PVC) rigide, hostile aux micro-organismes, inhibant leur développement, voire causant leur mort. Ce but est atteint par la présence dans la matrice polymérique des feuilles d'au moins une substance toxique pour les micro-organismes, substance dite biocide. De telles substances ont, de préférence, une action toxique à large spectre antibiologique, notamment contre les bactéries, les algues et les champignons microscopiques; ces substances sont bactéricides ou au moins bactériostatiques, fongicides ou au moins fongistatiques, et algicides.

Ces substances sont incorporées à la matière plastique constituant les corps d'échange au moment de la fabrication des feuilles, en particulier lors de leur calandrage. Il ne s'agit donc pas d'un traitement de surface. L'inclusion de ces substances biocides dans la matrice en haut polymère organique réduit à une valeur très faible leur perte par lessivage, ou lixiviation, due au ruissellement de l'eau à la surface des feuilles, lorsqu'elle passe à travers le corps d'échange.

De plus la très légère perte qui subsiste néanmoins est compensée par une faible migration de la substance biocide de l'intérieur de la feuille vers la surface, phénomène de diffusion qui tend à uniformiser la concentration du biocide dans toute la masse du polymère organique. Cette perte est aussi suffisamment faible pour ne pas présenter de danger pour les personnes qui seraient en contact avec l'eau de circulation du réfrigérant, ni pour l'environnement où serait évacuée la purge du réfrigérant.

La substance est de préférence un composé organo-arsénical. Le composé organo-arsénical est de préférence du type phénoxarsine.

En particulier, la substance biocide est l'oxybisphénoxarsine (OBPA).

La teneur du polymère organique constituant les feuilles des packings (garnissage) du réfrigérant est, par exemple, de 0,05% en OBPA, soit 500 ppm. Pour des raisons de sécurité et/ou de facilité de manutention et d'homogénéisation de la substance biocide dans le PVC rigide, cette substance peut être préalablement mélangée à une substance inerte, un porteur, dans laquelle sa teneur est, par exemple, de 5%.

La teneur finale de 0,05% de l'exemple cité est alors atteinte par l'incorporation de 1% du mélange intermédiaire au polymère organique constituant le garnissage, notamment au PVC rigide. La présence dans le produit final d'une charge inerte de 0,95% (correspond à 1% de 100% - 5%) est sans importance sur les caractéristiques des feuilles (influence négligeable). Cette charge inerte peut éventuellement être au moins partiellement un plastifiant du polymère.

Entrent en ligne de compte les plastifiants usuels pour ce genre de polymère. Lorsqu'on utilise du PVC rigide, la charge préférée, destinée à contenir la phénoxarsine, est une résine polymérisée de chlorure de vinyle d'acétate de vinyle (copolymère PVC-PVA).

## Revendications

1. Dispositif de garnissage pour installation de mise en contact direct d'eau et d'air atmosphérique dont les paquets de garnissage sont composés de feuilles de ruissellement thermoformées constituées d'un haut polymère organique, caractérisé en ce qu'au moins une substance inhibitrice du développement de micro-organismes est incluse dans la masse du haut polymère.

2. Dispositif de garnissage suivant la revendication 1, caractérisé en ce que la substance inhibitrice est toxique pour la plupart des bactéries, des algues et des champignons microscopiques.

3. Dispositif de garnissage suivant la revendication 1, caractérisé en ce que la substance inhibitrice est bactériostatique et fongistatique.

4. Dispositif de garnissage suivant la revendication 1, caractérisé en ce que la substance inhibitrice est algicide.

5. Dispositif de garnissage suivant la revendication 1, caractérisé en ce que la substance inhibitrice est bactéricide et fongicide.

6. Dispositif de garnissage suivant la revendication 1, caractérisé en ce que la substance inhibitrice est un composé organo-arsénical.

7. Dispositif de garnissage suivant la revendication 6, caractérisé en ce que la substance inhibitrice est choisie parmi les phénoxarsines.

8. Dispositif de garnissage suivant la revendication 7, caractérisé en ce que la substance inhibitrice est l'oxybisphénoxarsine.

9. Dispositif de garnissage suivant la revendication 8, caractérisé en ce que l'oxybisphénoxarsine est présente à raison de 0,05% en poids dans la feuille de garnissage.

10. Dispositif de garnissage suivant la revendication 9, caractérisé en ce que l'oxybisphénoxarsine se trouve mélangée à une substance inerte dans laquelle sa teneur peut être de 5%, la teneur de 0,05% en oxybisphénoxarsine dans la feuille étant alors atteinte par l'incorporation de 1% du mélange intermédiaire au polymère organique du garnissage.

11. Dispositif de garnissage suivant l'une quelconque des revendications 1 à 10, caractérisé en ce que le haut polymère de la feuille de garnissage est du polychlorure de vinyle rigide.

## Patentansprüche

1. Füllkörpervorrichtung für eine Einrichtung zum direkten Kontaktieren von Wasser und Atmosphärenluft, deren Füllkörperelemente von warmverformten Rieselfolien gebildet werden, welche aus einem organischen Hochpolymeren bestehen, **dadurch gekennzeichnet,** daß wenigstens eine ein Wachstum von Mikroorganismen hemmende Substanz in der Masse des Hochpolymeren enthalten ist.

2. Füllkörpervorrichtung nach Anspruch 1, **dadurch gekennzeichnet,** daß die Hemmsubstanz gegenüber dem Großteil von Bakterien, Algen und mikroskopischen Pilzen toxisch ist.

3. Füllkörpervorrichtung nach Anspruch 1, **dadurch gekennzeichnet,** daß die Hemmsubstanz bakteriostatisch und fungistatisch ist.

4. Füllkörpervorrichtung nach Anspruch 1, **dadurch gekennzeichnet,** daß die Hemmsubstanz algizid ist.

5. Füllkörpervorrichtung nach Anspruch 1, **dadurch gekennzeichnet,** daß die Hemmsubstanz bakterizid und fungizid ist.

6. Füllkörpervorrichtung nach Anspruch 1, **dadurch gekennzeichnet,** daß die Hemmsubstanz eine organische Arsenverbindung ist.

7. Füllkörpervorrichtung nach Anspruch 6, **dadurch gekennzeichnet,** daß die Hemmsubstanz aus Phenoxarsinen gewählt ist.

8. Füllkörpervorrichtung nach Anspruch 7, **dadurch gekennzeichnet,** daß die Hemmsubstanz Oxybisphenoxarsin ist.

9. Füllkörpervorrichtung nach Anspruch 8, **dadurch gekennzeichnet,** daß das Oxybisphenoxarsin in einem Gewichtsanteil von 0,05 % in der Füllkörperfolie enthalten ist.

10. Füllkörpervorrichtung nach Anspruch 9, **dadurch gekennzeichnet,** daß das Oxybisphenoxarsin in eine inerte Substanz eingemischt vorliegt, in welcher sein Gehalt bei 5 % liegen kann, wobei der Gehalt von 0,05 % an Oxybisphenoxarsin in der Folie dadurch erhalten wird, daß 1 % des Zwischengemisches in das organische Füllkörperpolymer eingebracht wird.

11. Füllkörpervorrichtung nach einem der Ansprüche 1 bis 10, **dadurch gekennzeichnet,** daß das Hochpolymere der Füllkörperfolie aus hartem Polyvinylchlorid besteht.

**Claims**

1. A packing device for an installation for bringing water and atmospheric air into direct contact, which packing elements comprise thermoformed trickling sheets formed by a high organic polymer, characterized in that at least one substance which inhibits the development of micro-organisms is included in the body of the high polymer.

2. A packing device according to Claim 1, characterized in that the inhibiting substance is toxic to the majority of bacteria, algae and microscopic fungi.

3. A packing device according to Claim 1, characterized in that the inhibiting substance is bacteriostatic and fungistatic.

4. A packing device according to Claim 1, characterized in that the inhibiting substance is algicidal.

5. A packing device according to Claim 1, characterized in that the inhibiting substance is bactericidal and fungicidal.

6. A packing device according to Claim 1, characterized in that the inhibiting substance is an organo-arsenical compound.

7. A packing device according to Claim 6, characterized in that the inhibiting substance is selected from phenoxarsines.

8. A packing device according to Claim 7, characterized in that the inhibiting substance is oxybisphenoxarsine.

9. A packing device according to Claim 8, characterized in that the oxybisphenoxarsine is present in a proportion of 0.05% by weight in the trickling sheet.

10. A packing device according to Claim 9, characterized in that the oxybisphenoxarsine is mixed with an inert substance in which its content can be 5%, the content of 0.05% oxybisphenoxarsine in the sheet being in that case achieved by the incorporation of 1% of the intermediate mixture in the organic polymer of the packing.

11. A packing device according to any of Claims 1 to 10, characterized in that the high polymer of the trickling sheet is rigid polyvinyl chloride.